# EUROPEAN PATENT APPLICATION

(11) **EP 2 173 099 A1**
(43) Date of publication of application: **07.04.2010**
(21) Application number: 08777074.9
(22) Date of filing: 02.06.2008
(51) Int. Cl.: H04N 7/173, H04N 5/445

(54) **DIGITAL BROADCAST RECEIVER**

(30) Priority: 29.06.2007 JP 2007172084
(71) Applicant: Sharp Kabushiki Kaisha, Osaka-shi, Osaka 545-8522 (JP)
(72) Inventor: OHI, Yuji, Osaka-shi, Osaka 545-8522 (JP)
(74) Representative: Müller - Hoffmann & Partner
(86) International application number: PCT/JP2008/060123
(87) International publication number: WO 2009/004880

(57) **Abstract**

A digital broadcast receiving apparatus **characterized by** including a program information acquisition unit for acquiring program information and an electronic program table editing unit for editing an electronic program table based on program information acquired by the program acquisition unit wherein services having TSIDs to identify a same TS are displayed in a same program information display area. When different programs are broadcast through sub-channels, the electronic program table editing unit displays those by dividing the display of the time zone, in which different programs are broadcast, into parts corresponding to the number of the sub-channels. In this occasion, the sizes of the display areas allocated to the broadcasting stations are made to be same in the channel axis direction. In this way, by making the display areas allocated to each broadcasting station to be same, the general program displaying fame needs not be changed even if there are multiple services having a TSID to identify a same TS. According to the present invention, compared with a conventional program table, more information can be displayed thereby improving the glanceability of the program table.

## Description

### Technical Field

The present invention relates to a digital broadcasting receiving apparatus and particularly to a technique to display an electronic program table in the digital broadcasting receiving apparatus.

### Background Art

In a digital broadcasting receiving apparatus for receiving digital television broadcasting, an electronic program table is created based on EPG (electronic program guide) information acquired from a broadcast signal and is displayed as an image on a screen. Then, a user can select a desired program from an electronic program table displayed as an image to view the program and reserve the recording thereof.

In this respect, since display areas are secured by the amount corresponding to the number of subchannels included in each broadcasting station, the size of the area to display programs is different for each broadcasting station. Therefore, the number of broadcasting stations displayed on one screen has been decreased.

Moreover, since the number of the broadcasting stations displayed on one screen is small, it is not possible to display the information of all the broadcasting stations without scrolling, thus degrading the glanceability of the display.

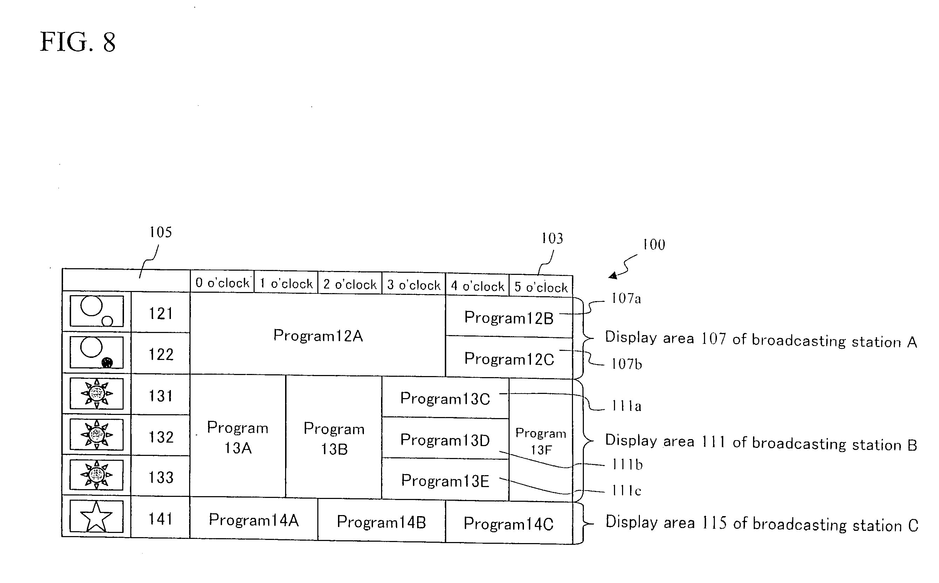

Figure 8 illustrates a display example based on the electronic program table function equipped on a product supplied by the Applicant. In an electronic program table 100 shown in Figure 8, with a channel axis being represented by a longitudinal axis 105 and a time axis by a lateral axis 103, a plurality of program information is displayed in a plurality of display areas. For example, for service IDs 121 and 122 of a same broadcasting station, only a program 12A is displayed from 0 o'clock to 4 o'clock; two programs: a program 12B and a program 12C, are displayed in a display area 107 from 4 o'clock to 6 o'clock; and with the display area 107 being divided into two parts in the channel axis direction, a program 12B is displayed in an area 107a and a program 12C in an area 107b. Further, in an area 111 including service IDs 131 to 133 of a same broadcasting station, a program 13C is displayed in an area 111a, a program 13D in an area 111b, and a program 13E in an area 111c (see Patent Document 1).
Patent Document 1: JP Patent Publication (Kokai) No. 2006-210966A.

### Disclosure of the Invention

### Problems to be Solved by the Invention

However, there is a problem in that discrepancies take place in the display area of each broadcasting station depending on the number of service IDs. Especially, when the number of broadcasting stations is large, since the number of the broadcasting stations which can be viewed at a glance decreases, scrolling is needed to check all the broadcasting stations.

It is an object of the present invention to improve the glanceability in an electronic program table while displaying more information.

### Means for Solving the Problems

According to an aspect of the present invention, there is provided a digital broadcasting receiving apparatus, characterized by comprising: a program information acquisition unit for acquiring program information; and an electronic program table editing unit for editing an electronic program table based on program information acquired by the program acquisition unit, wherein services having a TSID which identifies the same TS are displayed in a same program information display area.

It is preferable that the electronic program table editing unit arranges such that when different programs are broadcast in subchannels, the display of the time zone, in which the different programs are broadcast, is displayed by being divided into parts corresponding to the number of the subchannels. In this occasion, it is preferable that display areas allocated to each broadcasting station have the same size in a channel axis direction. Thus, configuring the display area allocated to each broadcasting station to have the same size in the channel axis direction will result in that even when there are a plurality of services which have the same TSID to identify the same TS, the general framework of program display needs not to be changed. It is noted that TS is the abbreviation of Transport Stream, which is specified in the MPEG system standard (ISO/IEC 13818-1). TSID is an identifier allocated to each TS and is unique within a network.

In the above description, when the display area is displayed by being divided into parts corresponding to the number of subchannels, the service ID may also be divided corresponding to the division of the subchannels. This will further make the display easier to be understood. It is noted that a service (a formation channel) refers to a series of scheduled broadcasting programs which are formed by broadcasters, and a service ID is an identifier to uniquely identify the service.

Further, it is preferable to include a database unit for storing a table in which the above described program information including a TSID is classified for each service ID. The above described electronic program table editing unit preferably determines whether or not there is agreement in the TSID, and arranges such that program information of a same TSID is displayed in the same program information display area by dividing the same.

According to another aspect of the present invention, there is provided a method of editing an electronic program table, characterized by comprising the steps of: acquiring program information, which includes a broadcasting station name and a TSID to uniquely identify a TS, from a broadcast wave; acquiring information on the service to be displayed in a display area within an electronic program table, from the program information; determining whether or not the information of currently acquired service agrees in the TSID with an immediately preceding service; and if there is agreement in the TSID with the immediately preceding service, redisplaying a program display box for the services of a same TSID, and if there is no agreement in the TSID with the immediately preceding service, displaying a program display box as a different service. The method preferably further comprises a step of continuing a loop to process the redisplaying/displaying of the program display box until all the information is acquired.

Further, it may be a program for causing a computer to execute the above described steps or a computer readable storage medium for storing the program. The program may be acquired through a transmission medium.

### Advantages of the Invention

According to the present invention, compared with conventional program tables, more information can be displayed and therefore the glanceability of the program table will be improved. A further advantage is that even when another program is occurring in a subchannel, since the program portions are displayed respectively in different manners, it is easy to understand that another program is occurring.

### Brief Description of the Drawings

Figure 1 is a functional block diagram to show a configuration example of a digital broadcasting receiving apparatus according to an embodiment of the present invention.
Figure 2 is a functional block diagram to show a configuration example of a recording/reproducing apparatus according to an embodiment of the present invention.
Figure 3 is a flowchart to show the editing process of electronic program table according to the present embodiment.
Figure 4 shows a configuration example of a database created by the editing process of electronic program table according to the present embodiment.
Figure 5 shows the flow of the displaying in a display area of each broadcasting station.
Figure 6 shows a display example of an electronic program table.
Figure 7 shows a variant of the display example shown in Figure 6.
Figure 8 shows a display example based on a common electronic program table function.

### Description of Symbols

- A: DIGITAL BROADCASTING RECEIVING APPARATUS
- 1: ANTENNA
- 3: DIGITAL BROADCASTING RECEIVING UNIT
- 5: CONTROL UNIT (CPU)
- 7: ELECTRONIC PROGRAM TABLE ACQUISITION UNIT
- 11: DECODER UNIT
- 15: REMOTE CONTROLLER PHOTO-RECEPTION UNIT
- 18, 19: STORAGE UNIT
- 21: SPEAKER
- 23: DISPLAY
- 25: VOICE SIGNAL PROCESSING UNIT
- 27: IMAGE SIGNAL PROCESSING UNIT

### Best Mode for Carrying Out the Invention

The display technique of electronic program table relating to the present invention is **characterized in that** in a case in which there is a service 1 of a certain TSID, when displaying the program information of a service 2 of the same TSID, the service 1 and the service 2 are displayed in the same area. It is characteristic that when separate programs are occurring respectively on a certain time zone in services of the same TSID, information of a program which is first drawn into a picture is redrawn in a smaller area and thereafter information of another program is added so that a plurality of programs can be displayed in the same time zone.

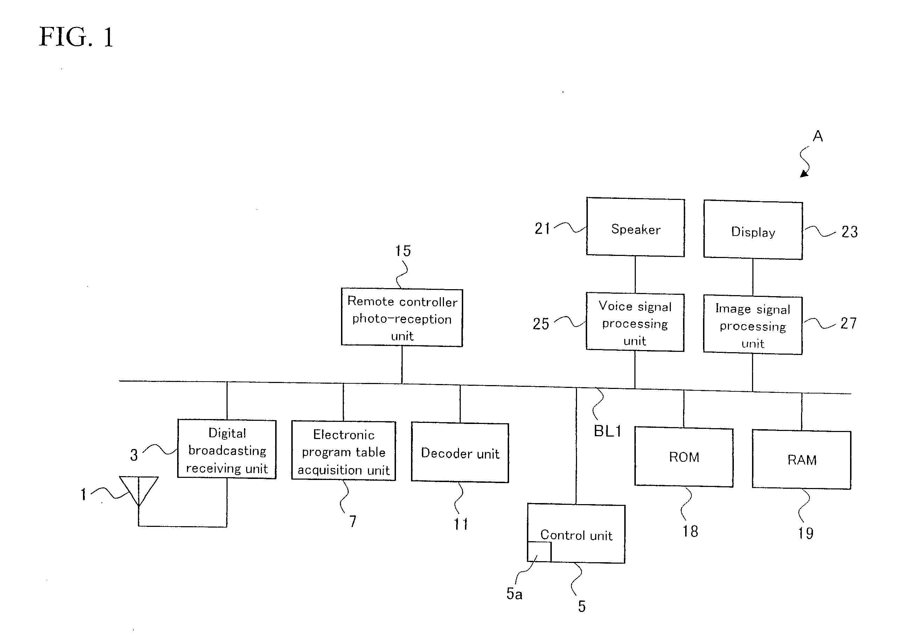

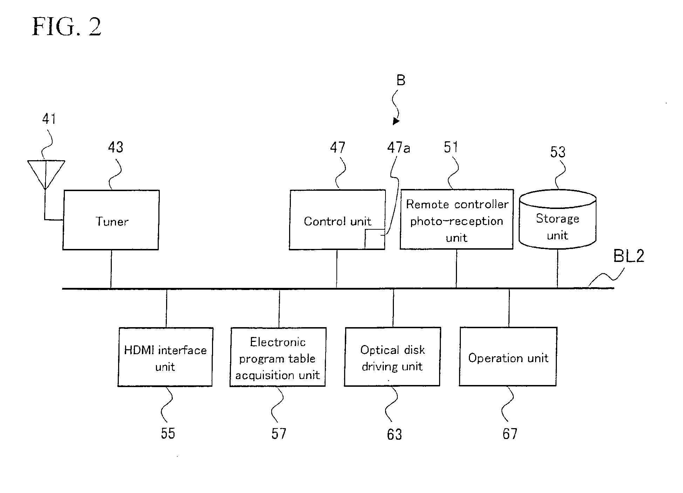

Hereafter, a digital broadcasting receiving apparatus according to an embodiment of the present invention will be described with reference to the drawings. Figures 1 and 2 respectively show the outline of a digital broadcasting receiving apparatus according to the present embodiment.

As shown in Figure 1, a digital broadcasting receiving apparatus A includes an antenna 1, a digital broadcasting receiving unit 3 including a tuner of digital broadcasting, an electronic program table acquisition unit 7, a decoder unit 11, a remote controller photo-reception unit 15, a voice signal processing unit 25 for performing the processing of voice signals, a speaker 21 for outputting voices based on the voice signal after the processing, an image signal processing unit 27 for processing image signals, a display 23 for outputting images based on the image signals after the processing, a control unit (CPU) 5 for controlling each function block through a bus line BL1, and storage units (ROM and RAM) 18 and 19 for storing programs for performing the below described processing and other information. The control unit 5 includes, for example, an electronic program table editing unit 5a which is processed based on a program.

As shown in Figure 2, a DVD (HDD) recorder (recording/reproducing apparatus) B includes an antenna 41, a digital tuner 43, a control unit 47, a remote controller photo-reception unit 51, a storage unit (HDD) 53, an HDMI interface unit 55, an electronic program table acquisition unit 57, an optical disk driving unit 63 such as a DVD, and an operation unit 67. The control unit 47 is provided with an electronic program table editing unit 47a which is operated by a program. Each of them can be operated by a corresponding remote control apparatus.

While the electronic program table is usable in any equipment, for example, if the equipment is compatible with the HDMI standard, the electronic program table can be displayed on the display 23 by connecting the both via an HDMI and using any remote control apparatus. The program information for creating an electronic program table may be extracted from the broadcast wave received by the above described digital broadcasting receiving unit, or may be separately acquired from the Internet, etc.

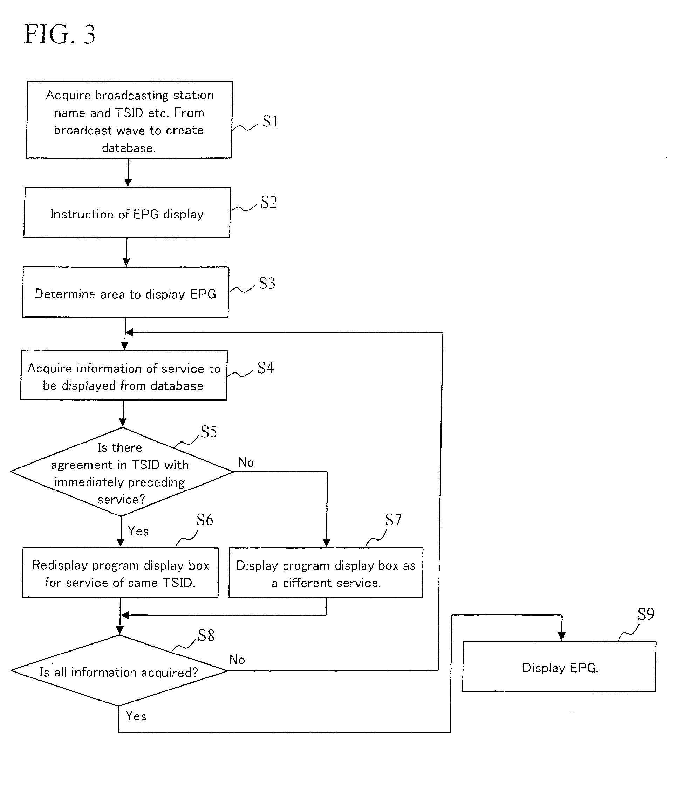

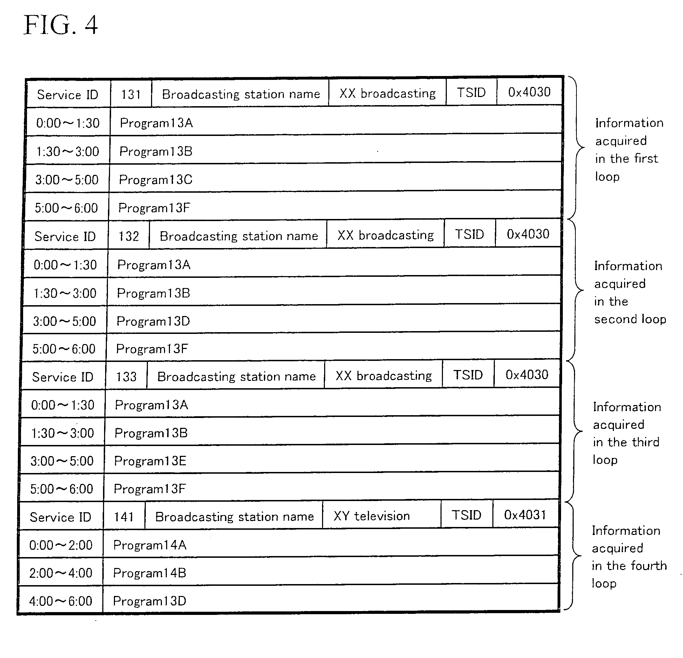

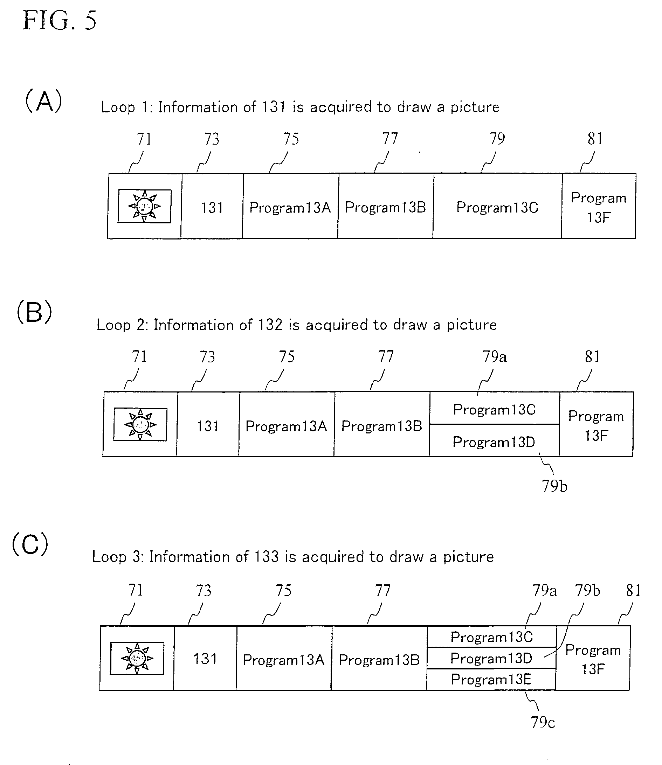

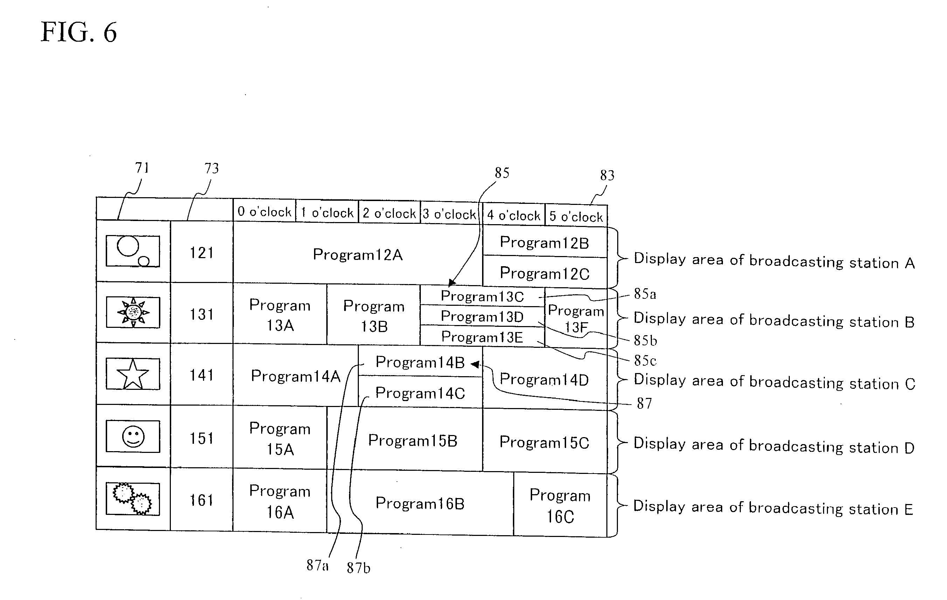

Next, the outline and display example of the editing process of an electronic program table according to the present embodiment will be described with reference to the drawings. Figure 3 is a flowchart to show the flow of the editing process of an electronic program table, and Figure 4 shows a configuration example of a database created by the editing process of the electronic program table. Figure 5 illustrates the flow of the displaying in a display area of each broadcasting station, and Figure 6 shows a display example of an electronic program table.

First, in step S1, program information such as a broadcasting station name and a TDIS to uniquely identify a TS is acquired from a broadcast wave to start the processing to create a database. In step S2, when an indication of EPG display, for example, an operation button for EPG display provided in a remote control apparatus is pressed, the process proceeds to step S3 to determine areas to be displayed of the EPG. Next, in step S4, service information to be displayed is acquired from the above described program information. Next, in step S5, determination is made on whether or not the information of the service currently acquired agrees in the TSID with an immediately preceding service. If there is agreement in the TSID with the immediately preceding service (Yes), the process proceeds to step S6 to redisplay a program display box for the service of the same TSID. If there is no agreement in the TDID with the immediately preceding service (No), the process proceeds to step S7 to display a program display box as a different service. In either case, in step S8, determination is made on whether or not all the information is acquired, and if the result is No, the process returns to step S4 and if Yes, proceeds to step S9 to perform EPG display. That is, until it is judged that all the information is acquired in step S8, the loop of the processing of the redisplaying/displaying of a program display box is continued. The manner of carrying out this process is shown in Figure 5. Figure 5(A) is a first loop to show a display example based on the information acquired in the first loop out of the database of Figure 4. As the information to be acquired in the first loop, based on a service ID of 131, a broadcasting station name of XX broadcasting, a TSID of 0x4030 of the database shown in Figure 4, for example, programs identified by symbols 13A, 13B, 13C and 13F from 0:00 to 6:00 are searched and the program information is displayed, as shown in Figure 5(A), based on the content of the database in each field in which a service logo field 71, a service ID field 73, and program display fields 75, 77, 79 and 81 are defined by a display frame of a certain height.

In the next second loop, based on a service ID of 132, a broadcasting station name of XX broadcasting, and a TSID of 0x4030 of the database shown in Figure 4, for example, programs identified by symbols 13A, 13B, 13D and 13F from 0:00 to 6:00 are searched and program information is displayed based on the content of the database, as shown in Figure 5(B), in each filed in which a service logo field 71, a service ID field 73, and program display fields 75, 77, 79 (79a and 79b) and 81 are defined by a display frame of a certain height. In this occasion, since the service ID 132 and the service ID 131 indicate the same program and no change (after acquiring the information of the service ID 132, it is seen that both are the same program), the display of the programs 13A, 13B and 13F will not be changed and the display of the program 13C is divided into two parts in the channel axis (longitudinal direction in the figure) so that information of the program 13C and the program 13D is displayed in each area.

In the next third loop, based on a service ID of 133, a broadcasting station name of XX broadcasting, and a TSID of 0x4030 of the database shown in Figure 4, for example, programs identified by symbols 13A, 13B, 13E and 13F from 0:00 to 6:00 are searched and program information is displayed based on the content of the database, as shown in Figure 5(C), in each filed in which a service logo field 71, a service ID field 73, and program display fields 75, 77, 79 (79a to 79c) and 81 are defined by a display frame of a certain height. In this occasion, since the service ID 133 and the service ID 131 indicate the same program and no change (after acquiring the information of the service ID 133, it is seen that both are the same program), the display of the programs 13A, 13B and 13F will not be changed and the display of the programs 13C/13D is changed (increased) from a two-part division to a three-part division in the channel axis (longitudinal direction in the figure) so that information of the programs 13C to 13E is displayed in each area.

It is noted that since the service IDs 132 and 133 have the same TSID as that of the service IDs 131 and 132 respectively, no additional display is made on the SIDs and logos of 132 and 133. Further, when a fourth loop takes place, similar processing is continued as shown in Figure 4.

Figure 6 shows a display example of an electronic program table which is displayed in a glanceable form by performing the above described processing. As shown in Figure 6, each program information is displayed in areas defined by a longitudinal axis which serves as a channel axis (71 and 73) and a lateral axis which serves as a time axis (83) in the figure. In this case, in a multiple formation area indicated by a symbol 85, a program 13C(85a), a program 13D(85b), and a program 13E(85C) are displayed in a three-stage setting, and the height of the three stages combined in the longitudinal axis direction is the same as that of one program.

Further, in a multiple formation area indicated by a symbol 87, a program 14B(87a) and a program 14C(87b) are displayed in a two-stage setting, and the height of the two stages combined in the longitudinal axis direction is the same as that of one program. Thus, it is advantageous that by setting the size of a display area (frame) of each broadcasting station to be equal, and in the case of a multiple formation, by displaying the area in a state of being divided in the channel axis direction within the range of the same display area, general frameworks become the same achieving an orderly frame display and thereby enabling to ensure glanceability, and confirmation of programs in the case of a multiple formation becomes easy as well.

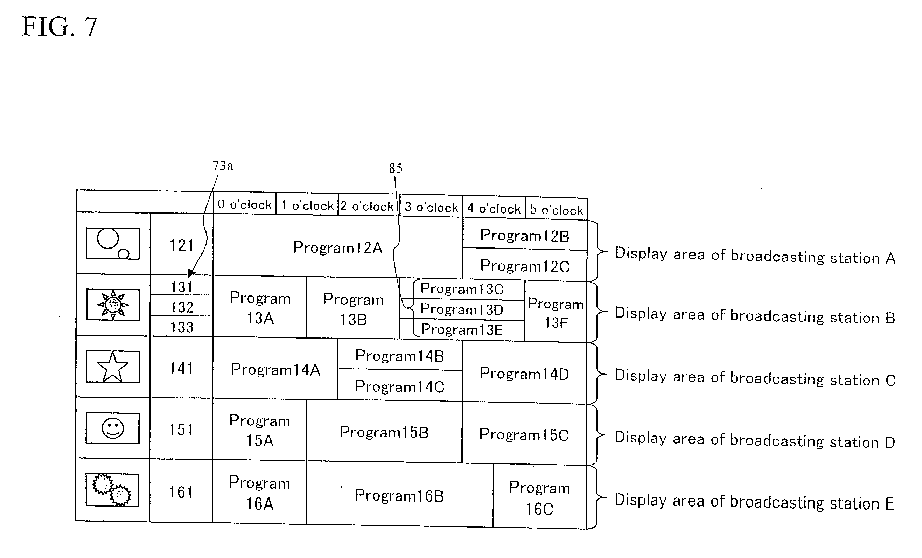

Next, a variant of the present embodiment will be described. Figure 7, which corresponds to Figure 6, is a display example of an electronic program table according to the variant. As shown in Figure 7, in accordance with a multiple display 85, three service IDs: 131, 132 and 133 are displayed as shown by the symbol 73a relating to the service ID field 73 as well. Alternatively, displaying broadcasting station names will enable to make the correspondence with the field 85 to be displayed in an easily understandable manner.

As so far described, since in the present embodiment, more information can be displayed in the same area compared with a conventional program table, there is an advantage that the glanceability of the electronic program table is improved. A further advantage is that since even when another program is occurring in a subchannel, program parts are displayed in different manners respectively, it is easy to recognize that another program is occurring.

It is noted that the above described configuration may be adopted independently for each network (such as terrestrial digital, CS digital, and BS digital networks) and as a whole for each network. For example, only the terrestrial digital broadcasting may adopt the configuration according to the present embodiment.

Further, the above described configuration may be adopted as a whole for each medium (television service, radio service, and data service). For example, only the television service may adopt the above described configuration. Moreover, an EPG may be configured such that the time axis and the channel axis are replaced with each other.

Moreover, since the digital broadcasting receiving apparatus includes a television receiving apparatus, a recording/reproducing apparatus, a personal computer, etc., the name and form of a product will not limit the invention.

### Industrial Applicability

The present invention is applicable to digital broadcasting receiving apparatuses.

## Claims

1. A digital broadcasting receiving apparatus, **characterized by** comprising:
a program information acquisition unit for acquiring program information; and
an electronic program table editing unit for editing an electronic program table based on program information acquired by said program acquisition unit, wherein services having a TSID which identifies a same TS are displayed in a same program information display area.

2. The digital broadcasting receiving apparatus according to claim 1, **characterized in that** said electronic program table editing unit arranges such that when different programs are broadcast in subchannels, the display of the time zone, in which the different programs are broadcast, is displayed by being divided into parts corresponding to the number of the subchannels.

3. The digital broadcasting receiving apparatus according to claim 2, **characterized in that** display areas allocated to each broadcasting station have a same size in a channel axis direction.

4. The digital broadcasting receiving apparatus according to claim 2 or 3, **characterized in that**
when the display area is displayed by being divided into parts corresponding to the number of subchannels, a service ID is also divided corresponding to the division of said subchannels.

5. The digital broadcasting receiving apparatus according to any of claims 1 to 4, **characterized by** further comprising:
a database unit for storing a table in which said program information including a TSID is classified for each service ID.

6. The digital broadcasting receiving apparatus according to claim 5, **characterized in that**
said electronic program table editing unit determines whether or not there is agreement in said TSID, and arranges such that program information of a same TSID is displayed in the same program information display area by dividing the same.

7. A method of editing an electronic program table, **characterized by** comprising the steps of:
acquiring program information, which includes a broadcasting station name and a TSID to uniquely identify a TS, from a broadcast wave;
acquiring information on the service to be displayed in a display area within an electronic program table, from said program information;
determining whether or not the information of currently acquired service agrees in the TSID with an immediately preceding service; and
if there is agreement in the TSID with the immediately preceding service, redisplaying a program display box for the services of a same TSID, and if there is no agreement in the TSID with the immediately preceding service, displaying a program display box as a different service.

8. The method according to claim 7, **characterized by** further comprising a step of:
continuing a loop to process the redisplaying/displaying of said program display box until all the information is acquired.

9. A program for causing a computer to perform the steps according to claim 7 or 8.

## Amended claims

### Amended claims under Art. 19.1 PCT

**1.** [Deleted]

**2.** [Deleted]

**3.** [Deleted]

**4.** [Deleted]

**5.** [Deleted]

**6.** [Deleted]

**7.** [Deleted]

**8.** [Deleted]

**9.** [Deleted]

**10.** A digital broadcasting receiving apparatus, **characterized by** comprising:
a program information acquisition unit for acquiring program information; and
an electronic program table editing unit for editing an electronic program table based on program information acquired by said program acquisition unit, wherein services having a TSID which identifies a same TS are displayed in a same program information display area, said digital broadcasting receiving apparatus **characterized in that**
said electronic program table editing unit arranges such that: when different programs are broadcast in subchannels, the display of the time zone, in which the different programs are broadcast, is displayed by being divided into parts corresponding to the number of the subchannels; and
the display areas allocated to each broadcasting station have a same size in a channel axis direction.

**11.** The digital broadcasting receiving apparatus according to claim 10, **characterized in that**
when the display area is displayed by being divided into parts corresponding to the number of subchannels, a service ID is also divided in correspondence with the division of said subchannels.

**12.** The digital broadcasting receiving apparatus according to claim 10 or 11, **characterized by** further comprising:
a database unit for storing a table in which said program information including a TSID is classified for each service ID.

**13.** The digital broadcasting receiving apparatus according to claim 12,
**characterized in that**
said electronic program table editing unit determines whether or not there is agreement in said TSID, and arranges such that program information of a same TSID is displayed in the same program information display area by dividing the same.

**14.** The digital broadcasting receiving apparatus according to any of claims 10 to 13, **characterized in that**
when the display area is displayed by being divided into parts corresponding to the number of the subchannels, said service ID field is also arranged such that service IDs corresponding to the number of divisions are displayed or broadcasting station names are displayed.

**15.** ] A method of editing an electronic program table, **characterized by** comprising the steps of:
acquiring program information, which includes a broadcasting station name and a TSID to uniquely identify a TS, from a broadcast wave;
acquiring information on the service to be displayed in a display area within an electronic program table, from said program information;
determining whether or not the information of currently acquired service agrees in the TSID with an immediately preceding service; and
if there is agreement in the TSID with the immediately preceding service, redisplaying a program display box for the services of a same TSID, and if there is no agreement in the TSID with the immediately preceding service, displaying a program display box as a different service, said method **characterized in that**
when different programs are broadcast in subchannels, the display of the time zone, in which the different programs are broadcast, is displayed by being divided into parts corresponding to the number of the subchannels; and
the display areas allocated to each broadcasting station have a same size in a channel axis direction.

**16.** The method according to claim 15, **characterized by** further comprising a step of:
continuing a loop of the processing of redisplay and display of said program display box until all the information is acquired.

**17.** A program for causing a computer to perform the steps according to claim 15 or 16.
